# EUROPEAN PATENT APPLICATION

(11) **EP 3 244 318 A1**
(43) Date of publication of application: **15.11.2017**
(21) Application number: 16207206.0
(22) Date of filing: 28.12.2016
(51) Int. Cl.: G06F 13/24

(54) **METHOD AND UNIT FOR HANDLING INTERRUPTS IN A SYSTEM**

(30) Priority: 12.05.2016 IN 201641016536
(71) Applicant: Wipro Limited, 560 035 Karnataka (IN)
(72) Inventor: SADHU, Radha Krishna Moorthy, 85 Bangalore (IN)
(74) Representative: Finnegan Europe LLP

(57) **Abstract**

The present disclosure presents method and device for handling interrupts in a system. The method comprises receiving, by a receiving module of an interrupt handling device, one or more interrupt requests from one or more peripheral devices of a system, providing, by an action register of the interrupt handling device, one or more outputs to a control logic circuit of the interrupt handling device, based on the one or more interrupt requests, enabling, by the control logic circuit, at least one output port of the interrupt handling device based on the one or more outputs, where the one or more peripheral devices and one or more components of the system are connected to the at least one output port to perform one or more actions and generating, by a status register of the interrupt handling device, an indication of the one or more actions performed to handle the one or more interrupt requests to take immediate action.

## Description

### TECHNICAL FIELD

The present disclosure relates generally to digital circuits. More specifically, but without limitation, the present disclosure relates to a method and a unit to handle hardware interrupts by regulating hardware components of the system.

### BACKGROUND

A typical System on Chip (SOC) receives numerous interrupt requests from various modules associated with the SOC. High priority interrupts have to be attended by a Central Processing Unit (CPU) immediately. Conventional processing of handling an interrupt involves the CPU suspending an on-going process and storing the process in a stack. Thereafter, the CPU attends the interrupt by executing an Interrupt Service Routine (ISR). Further, the CPU retrieves the suspended process from the stack to complete the execution of the process. The total time taken by the CPU to perform the above mentioned steps to start executing the ISR is denoted as interrupt latency. Existing CPUs take multiple clock cycles or a few micro-seconds to execute the ISR. Hence, the delay in processing high priority interrupts may cause damage to the system.

Many methods are being developed to reduce the interrupt latency. Further, dedicated computing units (like additional CPU) are used to handle the interrupts which terminates main CPU intervention. These dedicated systems have to be compatible with the system architecture. Also, the dedicated units act as additional hardware to an existing system and may consume more power.

### SUMMARY

The present disclosure generally relates to an interrupt handling device. The interrupt handling device is referred to herein as a "Withdrawal Reflex Unit" (WRU). The name Withdrawal Reflex Unit is a metaphor for the withdrawal reflex of the human or animal body, which is intended to protect the body for further damage caused by a sudden external stimulus. The terms "interrupt handling device" and "Withdrawal Reflex Unit" (or "WRU") may be used interchangeably.

In an embodiment, the present disclosure discloses a method for handling interrupt requests of a system to reduce the impact of interrupt latency by taking an immediate action upon interrupt arrival, comprising receiving, by a receiving module of a Withdrawal Reflex Unit (WRU), one or more interrupt requests from one or more peripheral devices of a system, providing, by an action register of the WRU, one or more outputs to a control logic circuit of the WRU, based on the one or more interrupt requests, enabling, by the control logic circuit, at least one output port of the WRU based on the one or more outputs, where the one or more peripheral devices and one or more system components of the system are connected to the at least one output port to perform one or more actions and generating, by a status register of the WRU, an indication of the one or more actions performed to handle the one or more interrupt requests.

In an embodiment, the present disclosure discloses a Withdrawal Reflex Unit (WRU) to handle interrupt requests of a system to perform an immediate action upon receipt of interrupt from peripherals before CPU processes them in a conventional manner, comprising a receiving module, to receive one or more interrupt requests from one or more peripheral devices of a system, an action register programmed to receive the one or more interrupt requests from the receiving module and generate one or more outputs based on the one or more interrupt requests received, a control logic circuit to enable at least one output port of the WRU based on the one or more outputs, where the one or more peripheral devices and the one or more system components are connected to the at least one output port to perform one or more actions and a status register to generate an indication for the one or more actions performed to handle the one or more interrupt requests.

According to embodiments illustrated herein, a non-transitory computer-readable storage medium having stored thereon, a set of computer-executable instructions for causing a computer comprising one or more processors to perform steps of receiving, by a receiving module of a Withdrawal Reflex Unit (WRU), one or more interrupt requests from one or more peripheral devices of a system. The one or more processors may be further configured to providing, by an action register of the WRU, one or more outputs to a control logic circuit of the WRU, based on the one or more interrupt requests. The one or more processors may be further configured to enabling, by the control logic circuit, at least one output port of the WRU based on the one or more outputs, wherein the one or more peripheral devices and one or more components of the system are connected to the at least one output port to perform one or more actions. The one or more processors may be further configured to generating, by a status register of the WRU, an indication of the one or more actions performed to handle the one or more interrupt requests.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The novel features and characteristic of the disclosure are set forth in the appended claims. The disclosure itself, however, as well as a preferred mode of use, further objectives and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
**Figure 1** of the present disclosure illustrates an exemplary block diagram of a system for handling interrupt requests in accordance with some embodiments of the present disclosure;
**Figure 2** of the present disclosure shows a block diagram of a Withdrawal Reflex Unit (WRU) for handling interrupt requests in a system in accordance with some embodiments of the present disclosure;
**Figure 3** of the present disclosure shows an internal architecture of a Withdrawal Reflex Unit (WRU) in accordance with some embodiments of the present disclosure;
**Figure 4** of the present disclosure shows a system illustrating a process flow for handling interrupt requests of a system; and
**Figure 5** of the present disclosure shows an exemplary flow chart illustrating a method for handling interrupt requests of a system in accordance with some embodiments of the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

Embodiments of the present disclosure relate to a method and a device (or Withdrawal Reflex Unit, WRU) for handling interrupt request in a system. The WRU receives interrupt requests from one or more peripheral devices of a system in parallel to interrupt controller. Further, the WRU enables one or more ports of the WRU for performing one or more actions. Here, the one or more peripheral devices and one or more system components are connected to the one or more ports. Thus, the interrupt requests are handled without intervention of Central Processing Unit (CPU) of the system to take an immediate action upon interrupt much before CPU starts processing the ISR of that interrupt.

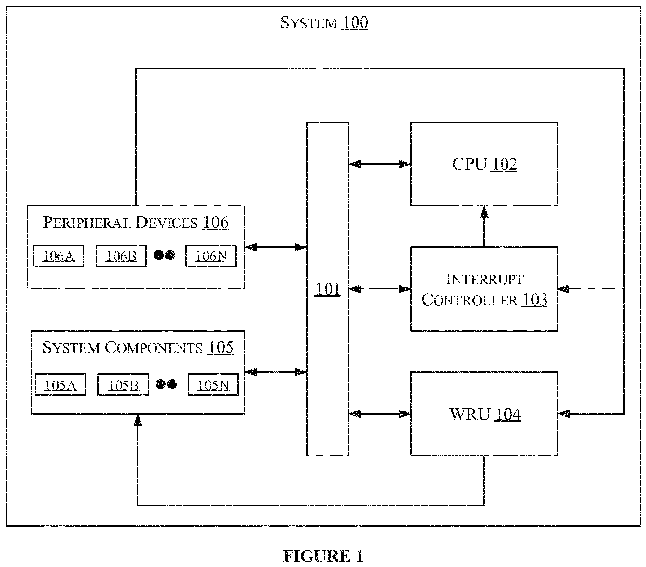

**Figure 1** of the present disclosure relates to a system 100 for handling interrupt requests. The system comprises a Central Processing Unit (CPU) 102, an interrupt controller 103, an interrupt handling device (referred to as a Withdrawal reflex Unit, WRU) 104, system component 105A, system component 105B, .., system component 105N, peripheral device 106A, peripheral device 106B, ... , peripheral device 106N and an on-chip bus 101. The system component 105A, system component 105B, ... , system component 105N can be collectively referred as one or more system components 105 hereafter in the present disclosure. The peripheral device 106A, peripheral device 106B, ... , peripheral device 106N can be collectively referred as one or more peripheral devices 106 hereafter in the present disclosure.

In an embodiment, the WRU 104 receives one or more interrupt requests from the one or more peripheral devices 106. Here, the one or more interrupt requests are hardware interrupt requests. Further, the WRU 104 commands either of the one or more peripheral devices 106 or the one or more system components 105 to perform one or more actions to handle the one or more interrupt requests.

In an embodiment, the one or more peripheral devices 106 may be at least one of a sensor interface, an actuator, disk drivers, network controllers, graphic drivers or any other electronic device controller. In one embodiment, the one or more system components 105 may be a clock control unit, power management unit, control unit or any other hardware unit of the system 100.

In one embodiment, the WRU 104 generates an indication of the one or more actions performed by at least one of the one or more peripheral devices 106 and the one or more system components 105. The WRU 104 receives an acknowledgement from at least one of the one or more peripheral devices 106 and the one or more system components 105 performing the one or more actions. The indication enables an Interrupt Service Routine (ISR) to verify the one or more actions performed for the one or more interrupt requests, when the ISR is executed by the CPU 102. Thereafter, the CPU 102 may take appropriate actions for the interrupt requests handled by the WRU 104, thus reducing the impact of interrupt latency.

In an embodiment, the WRU 104 may receive only high priority interrupt requests. Here, a user may prioritize the one or more interrupt requests and configure the WRU 104 to receive interrupt requests which are handled without the CPU 102 intervention. Alternatively, the interrupt controller 103 can prioritize interrupts and can provide the one or more interrupt requests to the WRU 104 for handling. In an embodiment, the system 100 as shown in **Figure 1** may be a System On Chip (SOC). Further, the SOC 100 may comprise the WRU 104.

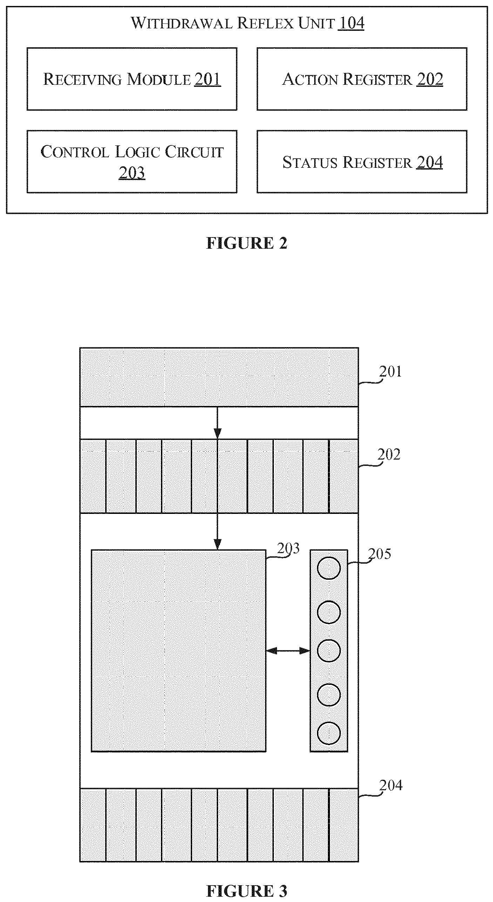

**Figure 2** of the present disclosure shows a block diagram of the WRU 104. The WRU 104 comprises a receiving module 201, an action register 202, a control logic circuit 203 and a status register 204.

The receiving module 201 receives the one or more interrupt requests from the one or more peripheral devices 106. The action register 202 receives the one or more interrupt requests from the receiving module 201. The action register 202 is programmed to generate one or more outputs based on the one or more interrupt requests. For example, the action register 202 may be programmed to enable clock gating of a clock control unit for a particular interrupt request. Alternately, the action register can be programmed to perform at least one of, reduce clock frequency, reduce voltage level to a particular voltage domain in a Power Management Unit (PMU) or write to an external Input/Output (I/O) port to handle the interrupt request. Hence, programming provides flexibility to perform different actions for a given interrupt request. Further, the control logic circuit 203 receives the one or more outputs from the action register 202. The one or more outputs comprises information about type of action required based on the one or more interrupt requests. Here, for each of the one or more interrupt requests one or more actions may be predefined. In an embodiment, the one or more actions may be predefined by a user or the system. Accordingly, the action register 202 is programmed to generate the one or more outputs which is provided to the control logic circuit 203. The control logic circuit 203 is a logic circuit with hardware interconnects configured to enable at least one output port of the WRU 104. Each of the one or more peripheral devices 106 and the one or more system components 105 are connected to the at least one output port of the WRU 104 by a dedicated communication interface. When the control logic circuit 203 enables the at least one output port, at least one of the one or more peripheral devices 106 and the one or more system components 105, connected to the at least one output port, performs the one or more actions. Further, the status register 204 receives an acknowledgement from the at least one of the one or more peripheral devices 106 and the one or more system components 105 which has performed the one or more actions. Thereafter, the status register 204 generates an indication of the one or more actions performed. The indication is then provided to the CPU for verification of the handled interrupt request. The verification of the handled interrupt requests confirms service provided for the one or more interrupt requests and the CPU 102 may take appropriate action for the same interrupt requests.

In an embodiment, the WRU 104 communicates with the one or more peripheral devices 106 and the one or more system components 105 over a dedicated communication interface configured in the system 100. The communication interface is configured such that communications over the dedicated communication interface takes place within predefined clock cycles. For example, the communication can place in one clock cycle over the dedicated communication interface.

In an embodiment, each of the one or more peripheral devices 106 and the one or more system components 105 are provided with a device identity (ID). Likewise, each unit of, the one or more peripheral devices 106 and the one or more system components 105 are provided with a resource ID. In an embodiment, for each of the one or more interrupt requests, an action to be performed is predefined. Hence, using the device ID and the resource ID, the action register 202 generates one or more outputs for performing one or more actions corresponding to the one or more interrupt requests. The one or more outputs may further comprise a device ID and/or a resource ID. The control logic circuit 203 receives the generated one or more outputs and enables at least one output port of the WRU 104 to which the desired one or more peripheral devices 106 and the system components 105 are connected. The internal architecture of the WRU 104 is as shown in **Figure 3** of the present disclosure.

In an embodiment, the action register 202 is programmable to alter the actions to be performed for an interrupt. Here, the action register 202 is programmable by a user.

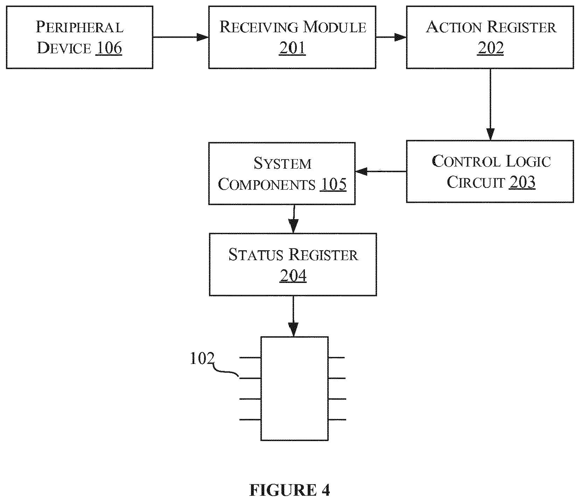

**Figure 4** of the present disclosure shows a system illustrating process flow for handling interrupt requests of the system with WRU.

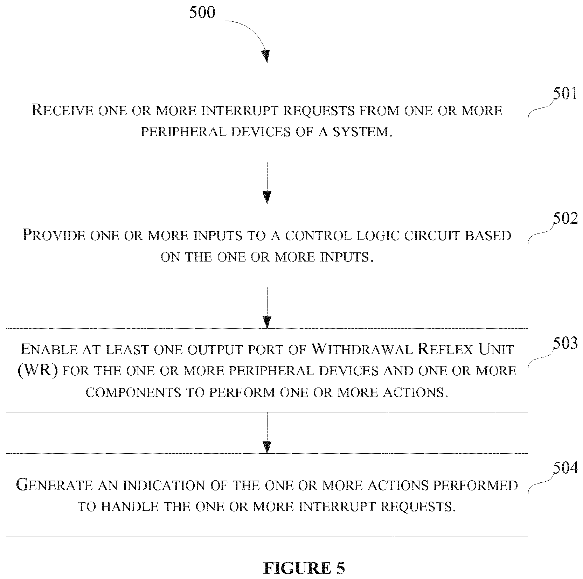

**Figure 5** of the present disclosure shows an exemplary flow chart illustrating a method for handling interrupt requests of a system in accordance with some embodiments of the present disclosure. As illustrated in **Figure 5**, the method 500 may comprise one or more steps for handling interrupt requests in a system to reduce the impact of interrupt latency.

The order in which the method 500 is described is not intended to be construed as a limitation, and any number of the described method blocks can be combined in any order to implement the method. Additionally, individual blocks may be deleted from the methods without departing from the scope of the subject matter described herein.

At step 501, the method includes receiving by a receiving module 201, one or more interrupt requests from one or more peripheral devices 106. The receiving module 201 of the WRU 104 receives the hardware interrupt requests from the one or more peripheral devices 106.

At step 502, the method includes providing, by the action register 202, one or more outputs to the action register 202, based on the one or more interrupt requests. For each of the one or more interrupt requests, one or more actions to be performed by one or more devices of the system 100 are predefined. Hence, to identify devices capable of performing the one or more actions, each of the one or more peripheral device 106 and each of the one or more system components 105 are provided with a device ID. Likewise, each unit of the one or more peripheral devices 106 and the one or more components 105 are provided with a resource ID. Examples of units may be, but are not limited to, clocks of the clock generator, a reset pin of a device, a power switch of a device, etc. Further, the action register 202 is programmed to generate one or more outputs. Furthermore, the generated one or more outputs are provided to the control logic circuit 203 to handle the one or more interrupt requests. In an embodiment, the one or more predefined actions to be performed can be modified based on the system 100. The modification can be performed by either a user or any computing unit associated with the system 100.

At step 503, the method includes enabling, by the control logic circuit 203 at least one output port 205 of the WRU 104 to facilitate the one or more peripheral devices 106 and the one or more system components 105 to perform the one or more predefined actions corresponding to the one or more interrupt requests. The control logic circuit 203 is a logic circuit with hardware interconnects. The control logic circuit 203 receives the one or more outputs from the action register 202. Upon receiving the one or more outputs from the action register 202, the control logic circuit 203 outputs an enable signal, thereby enabling at least one output port 205. The at least one output port 205 triggers the one or more peripheral devices 106 and the one or more system components 105 connected. Further, the one or more peripheral devices 106 and the one or more components 105 performs the one or more actions as desired by the user to handle the one or more interrupt requests.

At step 504, the method includes generating by a status register 204, an indication of the one or more actions performed by the one or more peripheral devices 106 and the one or more system components 105. The indication enables the ISR to verify the performance of the one or more actions to handle the one or more interrupt requests, when executed by the CPU 102.

For example, consider a system 100 with WRU 104 configured in the system 104. Let the system 100 comprise three peripheral devices 106 namely, a sensor, an actuator and a Input/Output (I/O) device. Let the system 100 further comprise system components 105 such as a clock generator, power management unit and graphic controllers. Also, let a CPU 102 and interrupt controller 103 be configured in the system 100 for receiving all interrupts generated in the system 104. Let the interrupt requests arriving from the sensor be considered as a high priority hardware interrupt. When an interrupt requests arrives from the sensor, the receiving module 201 of the WRU 104 and the interrupt controller 103 immediately receives the interrupt request. Upon receiving the interrupt request, the action register 202 generates appropriate one or more outputs. Let reducing the clock frequency be the action to be performed to handle the interrupt request arriving from the sensor. Accordingly, the action register 202 generates one or more outputs to enable the at least one output port 205 to which the clock generator is connected. Further, the generated outputs are provided to the control logic circuit 203. The control logic circuit 203 receives the one or more outputs from the action register 202 and drives an output voltage to enable at least one port 205. Then, the at least one port facilitates at least one of the one or more peripheral devices 106 and the one or more system components 105 connected to the at least one port to perform the desired action. Consider three output ports 205, where the clock generator is connected to the second output port 205. Based on the one or more outputs, the control logic circuit 203 enables the second output port 205. The second output port 205 triggers the clock generator, thus instructing the clock generator to perform an action. Further, the control logic circuit 203 can enable the second output port 205, thereby instructing the clock generator to perform the predefined one or more actions as desired by the user to handle the one or more interrupt requests. Once the action is performed, the status is captured in the status register 204 indicating the action performed, which will be verified by the CPU 102 during ISR execution of the same interrupt.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of **Figure 5** show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

In an embodiment, the present disclosure discloses a method and a WRU for handling interrupt requests in a system. The present disclosure discloses use of a logic circuit to handle hardware interrupts occurring in a system. Thus, the disclosed method and module can handle hardware interrupts instantly without intervention of the CPU.

In an embodiment, the impact of interrupt latency is reduced substantially, thereby reducing damages caused to the system due to delay in processing the interrupts. The WRU uses dedicated communication interface, where communications over the communication interface takes place within predefined clock cycles.

In an embodiment, the present disclosure does not use separate dedicated CPUs for handling the interrupts. The logic circuits consume very less power as compared to a dedicated CPU. Hence, power is consumed in the course of handling the interrupts.

In an embodiment, the WRU can be programmed to perform different actions for a given interrupt request. Thus, the WRU is flexible to perform various actions and may not be confined to perform an action for the interrupt request.

In an embodiment, the introduction of WRU is compatible with the existing system architecture. Further, the WRU can be configured to serve low priority interrupts, thereby improving debug capability of the system and reduce power.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for handling interrupts in a system, comprising:
receiving, by a receiving module an interrupt handling device, one or more interrupt requests from one or more peripheral devices of a system;
providing, by an action register of the interrupt handling device, one or more outputs to a control logic circuit of the interrupt handling device, based on the one or more interrupt requests;
enabling, by the control logic circuit, at least one output port of the interrupt handling device based on the one or more outputs, wherein the one or more peripheral devices and one or more components of the system are connected to the at least one output port to perform one or more actions; and
generating, by a status register of the interrupt handling device, an indication of the one or more actions performed to handle the one or more interrupt requests.

2. The method as claimed in claim 1, wherein the interrupt handling device communicates with the one or more peripheral devices and the one or more components over a dedicated communication interface.

3. The method as claimed in claim 1 or claim 2, wherein each of the one or more peripheral devices and the one or more components are provided with a peripheral identity.

4. The method as claimed in any of the preceding claims, wherein a resource identity is provided to each unit of, the one or more peripheral devices and the one or more components, provisioned to perform the one or more actions.

5. The method as claimed in any of the preceding claims, wherein the one or more interrupt requests are hardware interrupts.

6. The method as claimed in any of the preceding claims, wherein the action register is programmable to provide one or more outputs to the control logic circuit based on the one or more interrupt request.

7. A interrupt handling device for handling interrupts in a system, comprising:
a receiving module, configured to receive one or more interrupt requests from one or more peripheral devices of a system;
an action register programmed to:
receive the one or more interrupt requests from the receiving module; and
generate one or more outputs based on the one or more interrupt requests received;
a control logic circuit configured to enable at least one output port of the interrupt handling device based on the one or more outputs, wherein the one or more peripheral devices and the one or more components are connected to the at least one output port to perform one or more actions; and
a status register configured to generate an indication for the one or more actions performed to handle the one or more interrupt requests.

8. The interrupt handling device as claimed in claim 7, wherein the interrupt handling device is configured to communicate with the one or more peripheral devices and the one or more components over a dedicated communication interface within a predefined time period.

9. The interrupt handling device as claimed in claim 7 or claim 8, wherein each of, the one or more peripheral devices and the one or more components is provided with a peripheral identity.

10. The interrupt handling device as claimed in any of claims 7 to 9, wherein a resource identity is provided to each unit of, the one or more peripheral devices and the one or more components, provisioned to perform the one or more actions.

11. The interrupt handling device as claimed in any of claims 7 to 10, wherein the one or more interrupt requests are hardware interrupts.

12. The interrupt handling device as claimed in any of claims 7 to 11, wherein the action register is programmable by a user to provide the one or more outputs to the control logic circuit based on the one or more interrupt requests.

13. A computer-readable storage medium having stored thereon, a set of computer-executable instructions for causing a computer comprising one or more processors to perform the method of any of claims 1 to 6.
